(19) **Europäisches Patentamt**

**European Patent Office**

**Office européen des brevets**

(11) Veröffentlichungsnummer: **0 258 206**
**A1**

(12) **EUROPÄISCHE PATENTANMELDUNG**

(21) Anmeldenummer: **87890168.5**

(22) Anmeldetag: **10.07.87**

(51) Int. Cl.⁴: **B 01 D 53/04**
**C 01 B 13/02**

(30) Priorität: **11.07.86 AT 1895/86**

(43) Veröffentlichungstag der Anmeldung:
**02.03.88 Patentblatt 88/09**

(84) Benannte Vertragsstaaten:
**AT BE CH DE FR GB IT LI LU NL SE**

(71) Anmelder: **VOEST-ALPINE Aktiengesellschaft**
**Friedrichstrasse 4**
**A-1011 Wien (AT)**

(72) Erfinder: **Buttinger, Christian**
**Wienerstrasse 214 a**
**A-4020 Linz (AT)**

(74) Vertreter: **Kretschmer, Adolf, Dipl.-Ing. et al**
**Patentanwälte Dipl.Ing. A. Kretschmer Dr. Thomas M.**
**Haffner Schottengasse 3a**
**A-1014 Wien (AT)**

(54) **Verfahren zum Reinigen von Gasen sowie Vorrichtung zur Durchführung dieses Verfahrens.**

(57) Bei einem Verfahren zum Reinigen von Gasen, insbesondere zum Abtrennen von Sauerstoff aus Luft, unter Verwendung von Druckwechseladsorbern (1,2,3,4) wird das zu reinigende Gas unter Druck mit selektiv adsorbierenden Materialien in Kontakt gebracht und die adsorbierten Gase werden zur Regeneration der adsorbierenden Materialien durch Entspannen und gegebenenfalls Anwendung von Saugdruck desorbiert. Zur Erzielung einer annähernd kontinuierlichen Betriebsweise wird eine Mehrzahl von Druckwechseladsorbern (1,2,3,4,) zyklisch mit zu reinigendem Gas beaufschlagt, zur Desorption entspannt, gegebenenfalls zur weiteren Desorbierung unter Unterdruck gesetzt und dem Druckaufbau auf Beladedruck unterzogen. Die Zeiten für die Beladung, das Entspannen und gegebenenfalls die Anwendung von Saugdruck zur Desorption für das Regenerieren des adsorbierenden Materials und einen neuerlichen Druckaufbau auf den Beladedruck werden für die zyklische Durchführung des Verfahrens aneinander angeglichen und insbesondere gleich lang gewählt.

FIG. 2

## Beschreibung

Verfahren zum Reinigen von Gasen sowie Vorrichtung zur Durchführung dieses Verfahrens

Die Erfindung bezieht sich auf ein Verfahren zum Reinigen von Gasen, insbesondere zum Abtrennen von Sauerstoff aus Luft, unter Verwendung von Druckwechseladsorbern, bei welchem das zu reinigende Gas unter Druck mit selektiv adsorbierenden Materialien in Kontakt gebracht und durch Entspannen und gegebenenfalls Anwendung von Saugdruck die adsorbierenden Gase zur Regeneration der adsorbierenden Materialien desorbiert werden, wobei eine Mehrzahl von Druckwechseladsorbern zyklisch mit zu reinigendem Gas beaufschlagt, zur Desorption entspannt, gegebenenfalls zur weiteren Desorbierung unter Unterdruck gesetzt und dem Druckaufbau unter Beladedruck unterzogen wird, und die Zeiten für die Beladung, das Entspannen und gegebenenfalls die Anwendung von Saugdruck zur Desorption für das Regenerieren des adsorbierenden Materials und einen neuerlichen Druckaufbau auf den Beladedruck für die zyklische Durchführung des Verfahrens aneinander angeglichen werden, sowie auf eine Vorrichtung zur Durchführung dieses Verfahrens.

Zur Herstellung von technischen Gasen, wie beispielsweise Sauerstoff, Stickstoff oder Argon, werden zumeist Tieftemperaturrektifikationsanlagen verwendet. Derartige Anlagen sind relativ aufwendig und teuer und müssen darüberhinaus in regelmäßigen Abständen zum Tauen abgestellt werden.

Neben den Tieftemperaturrektifikationsverfahren sind beispielsweise aus "Ullmanns Encyclopädie der technischen Chemie, 4. Auflage, 1972, Bd. 2, Seiten 611, 612 sogenannte Pressure-Swing-Verfahren bekannt. Derartige Verfahren verwenden Adsorptionsreaktoren, in welche das zu reinigende Gas unter Druck eingeleitet wird und wahlweise die gewünschte reine Komponente oder die Verunreinigungen an dem adsorbierenden Material festgehalten werden, worauf die Desorption der adsorbierten Stoffe durch Druckentlastung oder Saugdruck erfolgt. Als adsorbierende Materialien kommen sogenannte Molsiebe bzw. Molsiebgranulate zum Einsatz. Mittels der Druckwechseltechnik, wie sie beispielsweise der DE-OS 31 22 701 zu entnehmen ist, kann beispielsweise reiner Wasserstoff aus Kokereigasen abgetrennt werden.

Aus der DE-OS 33 45 379 ist ein Verfahren zur Abtrennung und Gewinnung von relativ stark am Adsorptionsmittel adsorbierenden Gasen, in einer Druckwechseladsorptionsanlage mit vier Adsorbern bekannt.

In der DE-OS 32 05 451 ist weiters ein Verfahren zum Betreiben einer zyklisch arbeitenden Druckwechseladsorptionsanlage zur Reinigung und Zerlegung von Gasen mit mehreren Adsorbern beschrieben, in denen jeweils innerhalb eines Zyklus die Schritte, Adsorption, Entspannung bzw. Druckausgleich, Spülen und Druckaufbau durchgeführt werden, wobei als Spülgas bei der Entspannung von Adsorbern freiwerdendes Restgas verwendet, und der Druckaufbau mindestens teilweise durch Einpressen von Produktgas vorgenommen wird.

Die Erfindung zielt nun darauf ab, ein Verfahren der eingangs genannten Art mit einer möglichst einfachen, möglichst kleine Adsorbervolumina aufweisenden Anlage so zu führen, daß eine weitgehend kontinuierliche und eine weitgehend auf einem vorgegebenen Druckniveau gehaltene Abgabe eines gereinigten Gases bei gleichzeitig möglichst geringen Verlusten an gereinigten Gasen möglich ist, wobei gleichzeitig der notwendige Energieaufwand möglichst gering gehalten werden soll. Zur Lösung dieser Aufgabe besteht das erfindungsgemäße Verfahren im wesentlichen darin, daß der Adsorber vor der Entspannung mit Luft gespült wird und daß das ausgespülte Volumen einem anderen Adsorber in dessen Beladephase zugeführt wird, und daß anschließend an das Spülen eine mehrstufige, insbesondere zweistufige Entspannung gegen voneinander verschiedene Druckwechseladsorber vorgenommen wird. Dadurch, daß eine Mehrzahl von Druckwechseladsorbern zyklisch mit zu reinigendem Gas beaufschlagt wird, kann in Übereinstimmung mit dem Verfahrensablauf jeweils einer der Druckwechseladsorber unmittelbar Produktgas in die Produktgasabzugsleitung liefern. In den jeweils anderen Druckwechseladsorbern werden die für den ordnungsgemäßen Betrieb des Adsorbers erforderlichen weiteren Verfahrensschritte zyklisch durchgeführt, wobei neben dem Beladen des Druckwechseladsorbers unter gleichzeitigem Abzug von gereinigtem Gas in der Folge die Reinigung des adsorbierenden Materials durch Entspannung auf geringeren Druck vorgenommen werden kann und in einem weiteren Druckwechseladsorber eine weitergehende Regeneration des adsorbierenden Materials durch zumindest teilweises Evakuieren vorgenommen werden kann. Um das empfindliche adsorbierende Material von mechanischen Belastungen möglichst freizuhalten, erlaubt es die zyklische Verfahrensführung, den Druck im Druckwechseladsorber auf dasjenige Druckniveau wiederum anzuheben, bei welchem zu reinigendes Gas durch den Druckwechseladsorber hindurchgeführt wird, so daß eine schlagartige Druckänderung und damit eine übermäßige mechanische Belastung des Adsorbers sowie der adsorbierenden Materialien vermieden werden kann. Durch die Abstimmung und Angleichung der Zeiten für die einzelnen Verfahrensschritte ist ein zyklischer Betrieb möglich, bei welchem in jedem Adsorber abwechselnd einer der jeweils erforderlichen Verfahrensschritte für die ordnungsgemäße Durchführung des Druckwechselverfahrens abläuft. Dadurch, daß der Adsorber nun vor der Entspannung gespült wird, und daß das ausgespülte Volumen unter Betriebsdruck einem Adsorber zugeführt wird, läßt sich das Lückenvolumen im Adsorbermaterial, welches einen vergleichsweise höherem Reingasanteil enthalten kann ebenso wie das über dem Adsorber befindliche weitgehend reine Gas verlustfrei wiederum in die Rohgasleitung einspeisen und auf diese Weise einem Adsorber zuführen, in welchem gerade das Beladen erfolgt. Die Verluste an gereinigten Gasen werden auf diese Weise weitgehend herabgesetzt. Die zyklische Durchführung erlaubt es hiebei ohne weiteres diesen Spülschritt in einem der für die Durchführung der einzelnen Verfahrensschritte erforderlichen Zeitintervalle unterzubringen, wobei eine entsprechende Unterteilung der Zykluszeiten gewählt werden kann. In besonders einfacher Weise kann das Spülen eines Adsorbers innerhalb der für die Entspannung zur Verfügung stehenden Zykluszeit dieses Adsorbers erfolgen, wobei eine weitere Unterteilung dieses für die Entspannung zur Verfügung stehenden Zeitraumes dadurch vorgenommen werden kann, daß eine mehrstufige Entspannung erfolgt. Bei der anschließend an das Spülen vorgenommenen mehrstufigen Entspannung, insbesondere zweistufigen Entspannung gegen voneinander verschiedene Druckwechseladsorber, welche sich auf voneinander und vom Betriebsdruck verschiedenen Drucken befinden, kann beispielsweise so vorgegangen werden, daß eine erste Entspannung anschließend an das Spülen gegen denjenigen Druckwechseladsorber vorgenommen wird, welcher sich in der nächsten Zykluszeit in der Beladephase befindet, wobei auf diese Weise dieser weitere Druckwechseladsorber bereits teilweise auf Betriebsdruck angehoben wird. Die vollständige Anhebung auf Betriebsdruck kann in der Folge beispielsweise unter Verwendung von reinem Produktgas vorgenommen werden. Eine weitere Entspannung dieses bereits teilweise im Anschluß an den Spülvorgang entspannten Druckwechseladsorbers auf ein entsprechendes tieferes Druckniveau kann gegen einen zuvor evakuierten Druckwechseladsorber erfolgen, wobei der Druck in dem zuvor evakuierten Druckwechseladsorber auf ein erstes Druckniveau angehoben wird, welches mit Vorteil nahe dem atmosphärischen Druck liegt. Bei einer derartigen Verfahrensführung muß naturgemäß auch der für das Evakuieren des jeweiligen Druckwechseladsorbers zur Verfügung stehende Zeitraum entsprechend verkürzt werden, da ja ein Teil dieser für das Evakuieren prinzipiell zur Verfügung stehenden Zeit nunmehr durch den teilweisen Druckaufbau gegen einen bereits teilweise entspannten Behälter benötigt wird. Eine derartige Verfahrensführung bringt es mit sich, daß mit Vorteil so gearbeitet wird, daß für das Spülen und die beiden Entspannungsstufen je ein Drittel der für das Beladen vorgesehenen Zykluszeit aufgewendet wird.

Für das Evakuieren eines bereits auf deutlich abgesenktem Druckniveau befindlichen und weitgehend entspannten Behälters stehen bei einer derartigen Verfahrensführung zwei Drittel der ursprünglich zur Verfügung gestellten Zeit zur Verfügung, da ja im letzten Drittel eine Druckanhebung unter teilweiser Druckentlastung bzw. der zweiten Entspannung eines anderen Druckwechseladsorbers erfolgt. Mit Vorteil wird hiebei so vorgegangen, daß innerhalb der für das Evakuieren zur Verfügung stehenden Zeit anschließend an das Evakuieren eine Druckanhebung gegen einen teilweise entspannten Druckwechseladsorber erfolgt. Insgesamt stehen innerhalb dieser aufeinanderfolgenden Verfahrensschritte neben dem Unterdruck für das Evakuieren und dem Betriebsdruck für das Beladen zwei weitere dazwischenliegende Druckniveaus zur Verfügung. Die Verfahrensführung kann hiebei in vorteilhafter Weise so geführt werden, daß während der Druckausgleichsphasen zwischen unterschiedlichen Behältern die Strömungsrichtung in den einzelnen Druckwechseladsorbern umgekehrt wird, wodurch sich eine stabile Beladefront und eine besonders schonende Behandlung des Adsorbermaterials ergibt.

Druckwechseladsorber befinden sich in denjenigen Schichten des Adsorbermaterials, in welchen die Beladung weitgehend abgeschlossen ist, in einem Gleichgewichtszustand, in welchem in der Zeiteinheit im wesentlichen gleiche Mengen des zu adsorbierenden Gases adsorbiert und desorbiert werden. Der Durchbruch bzw. das Auftreten von ungereinigtem Gas in der Produktgasleitung tritt bereits vor Auslastung der vollständigen Kapazität des Adsorbermaterials auf und übliche einstufige Druckwechseladsorber können daher nicht bis zur Grenze ihrer Adsorberkapazität beladen werden. Eine Verbesserung in dieser Hinsicht läßt sich dadurch erzielen, daß man den Druckwechseladsorber in zwei in Serie geschaltete Abschnitte unterteilt, welche in gesonderten Druckwechseladsorbergehäusen aufgenommen sein können. Auf diese Weise kann der jeweils erste in Strömungsrichtung vorangehende Druckwechseladsorber bis zur vollständigen Ausnutzung seiner Kapazität beladen werden ohne daß hiebei nach dem nachgeschalteten Adsorberabschnitt ein Durchbruch beobachtet wird. Die Verfahrensführung wird nach vollständiger Beladung dieses ersten Druckwechseladsorbers auf Entspannung, Desorption, Evakuieren und neuerliches auf Betriebsdruck-Bringen umgeschaltet, wobei die zusätzlich in Serie geschalteten Druckwechseladsorber, welche vom Volumen wesentlich kleiner dimensioniert sein können, in derartige Verfahrensschritte integriert werden können ohne daß diese vollständig auf niederes Druckniveau entspannt werden müssen. Eine große Desorption und damit eine große Druckbelastung dieser zusätzlichen Druckwechseladsorber kann auf diese Weise vermieden werden und es kann weitgehend mechanisch unbelastetes Material für die kontinuierliche Endreinigung über lange Zeiträume aufrechterhalten werden. Mit Vorteil wird hiebei das erfindungsgemäße Verfahren so durchgeführt, daß jeweils zwei Druckwechseladsorber in Serie geschaltet sind, daß beide in Serie geschaltete Druckwechseladsorber während gleicher Zeiträume beladen, gespült und auf ein erstes unter dem Betriebsdruck für das Beladen liegendes Druckniveau entspannt werden und daß der beim Beladen in Strömungsrichtung des zu trennenden Gases erste Adsorber nach dem Erreichen dieses ersten Druckniveaus weiter entspannt und gegebenenfalls evakuiert wird.

Um eine möglichst gute Ausnützung der für die einzelnen Zyklen zur Verfügung stehenden Zeit zu gewährleisten wird vorzugsweise so vorgegangen, daß die Anzahl der Druckwechseladsorber gleich oder als ganzzahliges Vielfaches der Anzahl der hintereinander folgenden Verfahrensschritte, insbesondere als vier oder als ganzzahliges Vielfaches von vier gewählt wird. Auf diese Weise ist mit einfachen Steuereinrichtungen sowohl das Beaufschlagen der Druckwechseladsorber mit dem zu reinigenden Gas und das Entspannen als auch das Evakuieren der Druckwechseladsorber möglich. Die Steuerung des Verfahrens läßt sich dadurch noch weiter vereinfachen, daß der Wechsel von einem Verfahrensschritt zum nächsten in allen Druckwechseladsorbern im wesentlichen gleichzeitig vorgenommen wird.

Eine weitergehende Regeneration der adsorbierenden Materialien läßt sich dadurch erzielen, daß der langsame Druckaufbau auf den Beladedruck nach dem Entspannen oder der Anwendung eines Saugdruckes und gegebenenfalls nach der Anhebung auf ein unterhalb des Betriebsdruckes für das Beladen liegendes Druckniveau durch Ausgleich mit einem auf höheren Druckniveau stehenden Druckwechseladsorber, mit einer Teilmenge des Produktgases vorgenommen wird. Durch die Verwendung von Produktgas wird hiebei der Partialdruck der adsorbierten Komponente des Gases herabgesetzt und eine weitere Desorption erreicht.

Für die Herstellung von Sauerstoff als Produktgas wird mit Vorteil so vorgegangen, daß als adsorbierendes Material ein $N_2$ und unerwünschte Gaskomponenten zurückhaltendes Molsiebmaterial, insbesondere Molsiebgranulat, eingesetzt wird.

Das erfindungsgemäße Verfahren wird hiebei so durchgeführt, daß die Druckwechselbehälter bzw. Druckwechseladsorber mit Prozeßluft unter 1 bis 20 bar, insbesondere 2 bis 5 bar, verdichteter Prozeßluft durchströmt werden, wobei Stickstoff, Kohlendioxid, Feuchtigkeit und Kohlenwasserstoffe durch das Molekularsiebgranulat absorbiert werden. Die durchtretende Komponente ist somit relativ reiner Produktsauerstoff, wobei die Beladung naturgemäß nur so lange durchgeführt werden darf, solange ein Durchtreten der zu adsorbierenden Komponente nicht zu befürchten ist. Vor Erreichen der maximalen Kapazität der Beladung und bei Verwendung von zwei in Serie geschalteten Druckwechseladsorbern spätestens nach Erreichen der Beladekapazität des in Strömungsrichtung ersten Druckwechseladsorbers wird die Beladung unterbrochen und anschließend der Behälter gespült und entspannt. Gleichzeitig mit dieser Spülung und Entspannung wird in einem zweiten Druckwechseladsorber die Beladung begonnen. Durch die Entspannung im ersten Behälter sinkt der Partialdruck der adsorbierten Komponenten, insbesondere des Stickstoffes, und auf Grund dieses Absinkens des Partialdruckes ist das Molsiebgranulat nicht mehr in der Lage, die adsorbierten Komponenten, insbesondere den aufgenommenen Stickstoff, zurückzuhalten, wodurch eine teilweise Regeneration eintritt. Anschließend kann in einer dritten Verfahrensstufe ein weiteres Regenerieren durch Anwenden eines Saugdruckes mittels einer Vakuumpumpe erreicht werden. Mit dem Aufschalten eines Saugdruckes auf den ersten Behälter erfolgt gleichzeitig die Beendigung der Beladung im zweiten Behälter und der Beginn der Spülung des zweiten Behälters, wohingegen die Beladung in einem dritten Behälter begonnen wird. Die Anwendung des Saugdruckes im ersten Behälter hat ein weiteres Absenken des Stickstoffpartialdruckes zur Folge, wodurch die gewünschte Desorption des Molekularsiebes erreicht wird.

Der erste Behälter befindet sich in diesem Stadium somit auf einem unteratmosphärischen Druck, der zweite Behälter befindet sich am Ende dieses Verfahrensschrittes auf einem Druck zwischen den Beladedruck und dem Unterdruck und der dritte Behälter, in welchem zu diesem Zeitpunkt eine Beladung vorgenommen wurde, befindet sich auf dem Druck der verdichteten Prozeßluft. Um nun den ersten Behälter wiederum für die neuerliche Beladung vorzubereiten und starke Druckschwankungen zu vermeiden, wird der erste Behälter auf Arbeitsdruck gebracht. Zu diesem Zweck wird der erste Behälter zunächst gegen weitere Behälter unter Druckausgleich geschaltet und hierauf mit einer Teilmenge des Produktsauerstoffes beaufschlagt und möglichst langsam innerhalb der für diesen Verfahrensschritt zur Verfügung stehenden Zeit auf den Druck der verdichteten Prozeßluft gebracht. Durch die Verwendung des Produktsauerstoffes zum Aufbau dieses Druckes, wobei Produktsauerstoff entgegen der Strömungsrichtung bei der Adsorption eingebracht wird, wird neuerlich eine Stickstoffpartialdruckabsenkung beobachtet und zuletzt noch gebundener Stickstoff freigesetzt und gleichzeitig der Behälter mit Produktsauerstoff gefüllt. Am Ende dieses Druckaufbaues ist der Molsiebbehälter wiederum in der Lage, ohne mechanische Überbeanspruchung mit Druckluft beschickt zu werden, und es kann die zum Auffüllen des Druckwechseladsorbers verwendete Prozeßsauerstoffmenge als Produkt wieder rückgewonnen werden. Die zyklischen Umschaltungen der einzelnen Verfahrensschritte auf die einzelnen Druckwechselbehälter können in Abhängigkeit von einer Zeituhr gesteuert werden, so daß eine besonders einfach Anlagenkonzeption die Folge ist.

Die erfindungsgemäße Vorrichtung zur Durchführung dieses Verfahrens ist im wesentlichen dadurch gekennzeichnet, daß eine Gaszuführungsleitung, eine Entspannungsleitung, gegebenenfalls eine Saugleitung, und eine Produktgasabzugsleitung über jeweils wenigstens ein Wege- bzw. Verteilerventil je Leitung mit einer Mehrzahl von Druckwechseladsorbern in Verbindung setzbar ist. Dadurch, daß jeweils wenigstens ein Wege- bzw. Verteilerventil je Leitung vorgesehen ist, läßt sich eine besonders einfache Steuerung und Synchronisierung der einzelnen Umschaltvorgänge erzielen. Die Leitungen zu den einzelnen Behältern können kurz gehalten werden und es ist somit die in den Leitungen enthaltene Restgasmenge der einzelnen Verfahrensstufen gleichfalls überaus gering und auf Grund der Verfahrensführung mit einem Spülschritt weitgehend unkritisch.

In besonders vorteilhafter Weise sind die Wegeventile bzw. Verteilerventile als Kükenhähne oder Drehschieber ausgebildet. Eine derartige Ausbildung ermöglicht die Synchronisierung der Drehbewegung durch gemeinsamen Antrieb oder aber durch in Abhängigkeit von einem Schaltwerk, insbesondere einem Zeitschaltwerk, gesteuerte Stellmotoren. Eine besonders einfache Ausführungsform eines derartigen Drehschiebers besteht darin, daß die Drehschieber als Hähne ausgebildet und axial mit den Leitungen und über radiale Auslässe mit den Druckwechseladsorbern verbunden sind. Die Antriebe für die Wege- bzw. Verteilerventile können in einfacher Weise von elektrischen Stellmotoren gebildet sein, wobei die Antriebe der Wege- bzw. Steuerventile ansteuerbar oder die Wege- bzw. Steuerventile teilweise miteinander koppelbar sind, um eine vollständige Synchronisierung und gleichzeitige Umschaltung verschiedener Leitungen auf verschiedene Druckwechseladsorber zu ermöglichen.

Für die schonende Wiederherstellung des Prozeßgasdruckes, welcher beim Beladen dem jeweiligen Druckwechseladsorber zugeführt wird, unter gleichzeitiger Herstellung der maximalen Beladekapazität des adsorbierenden Materials ist die Ausbildung so getroffen, daß eine Zweigleitung der Produktgasleitung gegebenenfalls über ein Mengenregelventil mit einem zusätzlichen Wege- bzw. Verteilerventil verbunden ist, dessen Auslässe mit den einzelnen Druckwechseladsorbern in Verbindung stehen.

Um zu verhindern, daß ungereinigtes Produktgas abgezogen wird, was beispielsweise auf einen Defekt in einem Druckwechseladsorber oder ein Überschreiten der maximalen Beladekapazität zurückzuführen wäre, ist die Ausbildung mit Vorteil so getroffen, daß in die Produktgasleitung ein Analysengerät eingeschaltet ist und daß bei Überschreiten eines Konzentrationsgrenzwertes einer Komponente des zu gewinnenden Gases die Antriebe für die Wege- bzw. Verteilerventile ansteuerbar, insbesondere die Schaltintervalle für die Wege- bzw. Verteilerventile kontinuierlich veränderbar sind. Mit Vorteil kann die Ausbildung hiefür so getroffen sein, daß in die Produktgasleitung eine Mengenmeßstrekke eingeschaltet ist und daß nach dieser Produktmengenanzeige einerseits die Rohgaszuführung geregelt und anderseits die Schaltintervalle für die Wege- und Verteilerventile im wesentlichen proportional verändert werden. Alternativ kann in vorteilhafter Weise mit in Serie geschalteten Druckwechseladsorbern gearbeitet werden, wobei die aufwendige Regelung und Messung entfallen kann.

Eine besonders einfache Ausbildung der Ventilanordnung ergibt sich durch die Verwendung von 4/4-Wegeventilen, wobei jedem Weg des Wegeventils ein Druckwechseladsorber zugeschaltet ist und somit jeweils ein derartiges Ventil für jeden Druckwechseladsorber und jede Leitung vorgesehen ist. Die einfachste Art der zyklischen Verfahrensführung bei Zugrundelegen der Verfahrensschritte Beladen, Entspannen, Absaugen und schonenden, kontinuierlichen, neuerlichen Druckaufbau läßt sich mit den genannten 4/4-Wegeventilen und vier Druckwechseladsorbern erzielen.

Für den schonenden Druckaufbau unter Verwendung einer Teilmenge des Produktgases ist die Ausbildung mit Vorteil so getroffen, daß die Mengenregelung für zum Druckaufbau rückgeführtes Produktgas in Abhängigkeit von der Zeit, welche für den Druckaufbau im Zyklus zur Verfügung steht, auf linearen Druckaufbau einstellbar ist.

Die Vorrichtung zur Durchführung des Verfahrens ist für den Spülvorgang mit Vorteil so ausgebildet, daß an die Produktgasleitung oder im Falle von in Serie geschalteten Druckwechseladsorbern an die Verbindungsleitung derselben eine Zweigleitung angeschlossen ist, welche über ein abschließbares Ventil und gegebenenfalls über die Saugseite eines Ejektors oder Gebläses mit der Rohgaszuführungsleitung verbunden ist. Während dieses Spülvorganges muß das Druckniveau des Beladevorganges aufrechterhalten werden und die Verwendung eines Gebläses bzw. eines Ejektor können die Druckverluste bei dieser Einspeisung in die Rohgasleitung mit Sicherheit ausgeglichen werden.

Die für Druckwechseladsorberanlagen üblicherweise vorgesehene Behälterkonstruktion besteht zumeist in einer Einrichtung, bei welcher das Adsorberbett von unten nach oben mit in axialer Behälterrichtung durchströmt wird. Die Reihenfolge der zu adsorbierenden Gase ist durch die Art des Molekularsiebes und durch die Porenöffnung definiert. Im Falle von Zeolit mit einer Porenöffnung von 5 Å ergibt sich als Reihenfolge der von einem Molekularsieb adsorbierten Luftbestandteile zunächst Wasserdampf anschließend Kohlendioxid, Kohlenwasserstoffe, Stickstoff und zuletzt Sauerstoff und Argon. Ausgehend von einer vorgegebenen Molsiebmasse sowie dem bekannten Lufteinsatz ist es möglich bei Kenntnis des maximal zulässigen Druckverlustes die Schütthöhe festzulegen und in weiterer Folge den Behälterdurchmesser zu errechnen und in weiterer Folge die Schütthöhe. Aus der jeweils resultierenden Schütthöhe läßt sich der Druckverlust errechnen.

Der Druckverlust in Verbindung mit der Summe der projizierenden Granulatflächen ergibt eine Bettauftriebskraft, welche im äußersten Fall dem Gewicht der Schüttung gleich sein darf, da ansonsten ein Aufwirbeln des Bettes beobachtet wird.

Berechnungen der geometrischen Abmessungen haben ergeben, daß die Betthöhe bei 1,5 mm Granulatdurchmesser mit 2000 - 2500 mm limitiert ist und somit bei größeren Produktionsmengen die Adsorberdurchmesser sehr groß werden.

Große Adsorberdurchmesser haben unproportional große Toträume zur Folge. Davon abgesehen wurde beobachtet, daß die Luft feuchtigkeit konzentriert in der unteren Bettschicht adsorbiert wurde. Die Desorptionsgeschwindigkeit der gebundenen Feuchtigkeit ist dementsprechend groß, so daß auch große Desorptionskälten auftreten. Die Desorptionskälte kann nicht durch die Schüttung abgeführt werden, wenn die Durchmesser zu groß sind. In der Folge wird der Desorptionsstrom so stark abgekühlt, daß Feuchtigkeit in Tropfenform ausfällt und ab 0° C am Granulat ausfriert. Das von einem Eisfilm umgebene Granulat ist somit inaktiv.

Bei permanenter Wiederholung von Adsorption und Desorption wurden Bettemperaturen bis zu -67° C gemessen, wobei 1/3 der gesamten Schüttung mit Eis ummantelt war.

Insbesondere für höhere Durchsatzleistungen, beispielsweise oberhalb von 300 Nm³/h wird daher mit Vorteil eine Ausgestaltung der Druckwechseladsorber mit ringförmigen Adsorbersäulen, welche radial durchströmbar sind bevorzugt. Bei einer derartigen Ausbildung kommt es zu einer besseren Temperaturabstrahlung an der Mantelfläche zum umgebenden Gehäuse und damit zu weitgehend isothermen Verhältnissen, welche die Unterkühlung in Folge der Desorptionskälten verhindert. Auch bei dieser Ausgestaltung wird naturgemäß die Feuchtigkeit in den äußeren Randzonen bzw. Mantelzonen gebunden, jedoch kann die Wärme besser abgeführt und verteilt werden.

Die Erfindung wird nachfolgend an Hand eines, die einzelnen Verfahrensschritte einer erfindungsgemäßen Druckwechseladsorptionsanlage genau beschreibenden Beispieles näher erläutert.

Beispiel

Die Druckwechselanlage besteht aus vier parallel geschalteten Adsorber-Behältern, d.h. ein kompletter Verfahrenszyklus besteht aus vier gleich langen Teilzyklen, die nachfolgend mit den arabischen Ziffern 1 bis 4 beschrieben werden.

Ein Teilzyklus wird wiederum in drei gleich lange Zeiträume untergliedert (Bezeichnung a, b, c).

Nachfolgend wird ein gesamter Zyklus für den Molsiebbehälter 1 beschrieben. Die Molsiebbehälter 2 bis 4 fahren diesen Zyklus jeweils um einen Teilzyklus versetzt durch.

1a, b, c:

Während dieser Phase befindet sich der Molsiebbehälter 1 im Adsorptionsteilzyklus, d.h. er wird von unten nach oben mit Prozeßluft durchströmt, wobei Kohlenwasserstoffe, $CO_2$, Feuchtigkeit und insbesondere Stickstoff durch das Granulat adsorbiert wird und somit am Kopfende dieses Adsorbers Produkt Sauerstoff - abgesehen von den sehr kleinen Druckverlusten - mit dem Enddruck des Luftverdichters austritt. Lediglich im Zeitraum 1a besteht eine Reihenschaltung in der Weise, daß die Prozeßluft zuerst über den Adsorber 4, dann durch den Adsorber 1 geleitet wird.

2a:

Die Adsorptionsphase (1a, b, c) darf nur so lange andauern, bis die Minimum-Qualität an Sauerstoffprodukt erreicht wird, d.h., daß bereits in zulässigen Grenzen Stickstoff durchbricht. Da jedoch dieser Adsorber in der Lage ist, auch weiterhin Sauerstoff angereichertes Gas zu liefern, wird er weiterhin durchströmt, wobei das Austrittsgas - welches ja nicht mehr den Qualitätsansprüchen genügt - bereits dem Molsiebbehälter 2 zugeführt wird. Somit sind in der Phase 2a zwei Adsorber in Reihe geschaltet. Der daraus resultierende Vorteil schlägt sich in einer guten Schüttungsausnutzung nieder, sowie in geringsten Sauerstoffverlusten beim Desorbieren.

2b:

Der Adsorber 1 wird entspannt, indem das Gas des Adsorbers 1 dem auf einem tieferen Druckniveau stehenden Adsorber 3 zugeführt wird, und somit am Ende der Phase 2b ein Druckausgleich zwischen Adsorber 1 und Adsorber 3 erreicht wird.

2c:

Analog zu 2b wird hier ein Druckausgleich zwischen Adsorber 4 und Adsorber 1 durchgeführt.

3a:

Ab dieser Phase kann davon ausgegangen werden, daß sich im Todvolumen des Adsorbers 1 lediglich Stickstoff angereicherte Atmosphäre befindet, sowie gebundener Stickstoff im Granulat. Zur Enddesorption wird nun mit einer Vakuumpumpe evakuiert und das verfahrenstechnisch tiefste Druckniveau erzielt.

3b:

Zur Stabilisierung des Prozesses wird bei konstantem Tiefdruckniveau gezielt im Gegenstrom mit Produkt-Sauerstoff gespült.

3c:

Der nunmehr regenerierte Molsiebbehälter 1, welcher noch immer unter Tiefdruck steht, wird nun im Druckausgleich mit Behälter 2 aufgedrückt.

4a:

In dieser Phase ist der Molsiebbehälter 1 hermetisch vom Prozeß entkuppelt (Ruhestellung)

4b:

Der Molsiebbehälter 1 führt erneut einen Druckausgleich mit Behälter 3 durch.

4c:

Um wieder den Adsorptionsdruck herzustellen, wird von unten nach oben Prozeßluft zugeführt.

Der Molsiebbehälter 1 steht erneut für einen vollen Zyklus zur Verfügung (Beginn Phase 1).

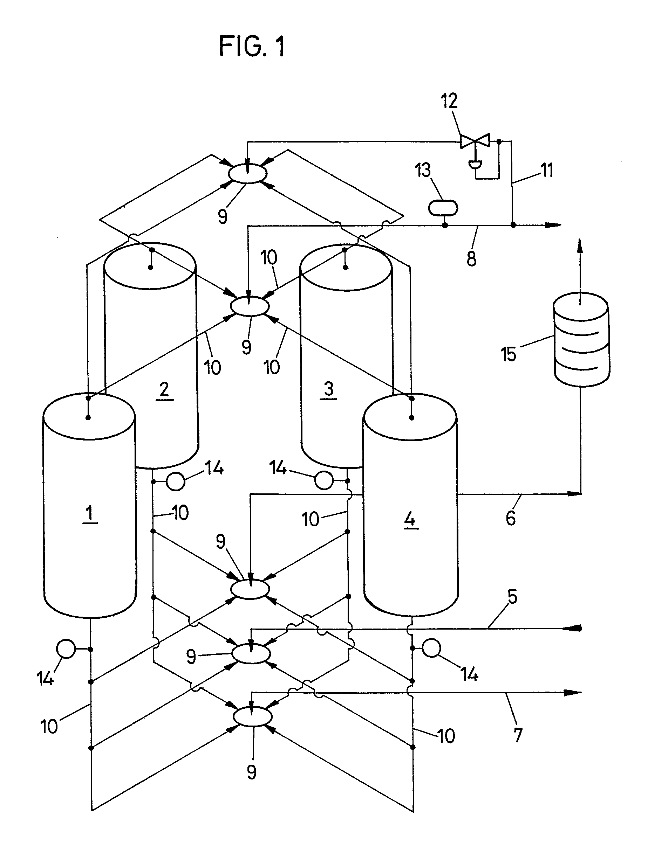

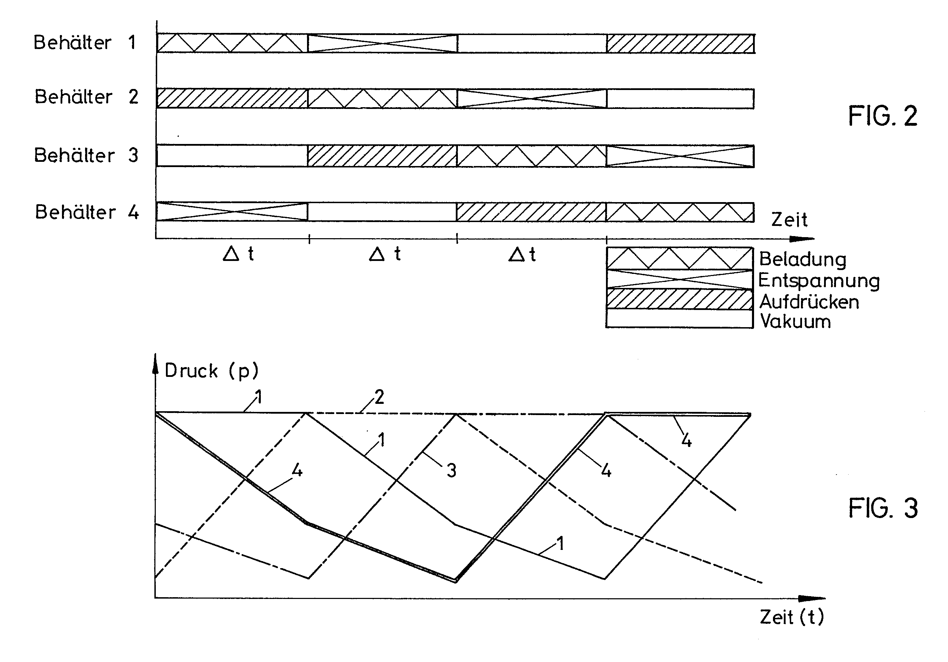

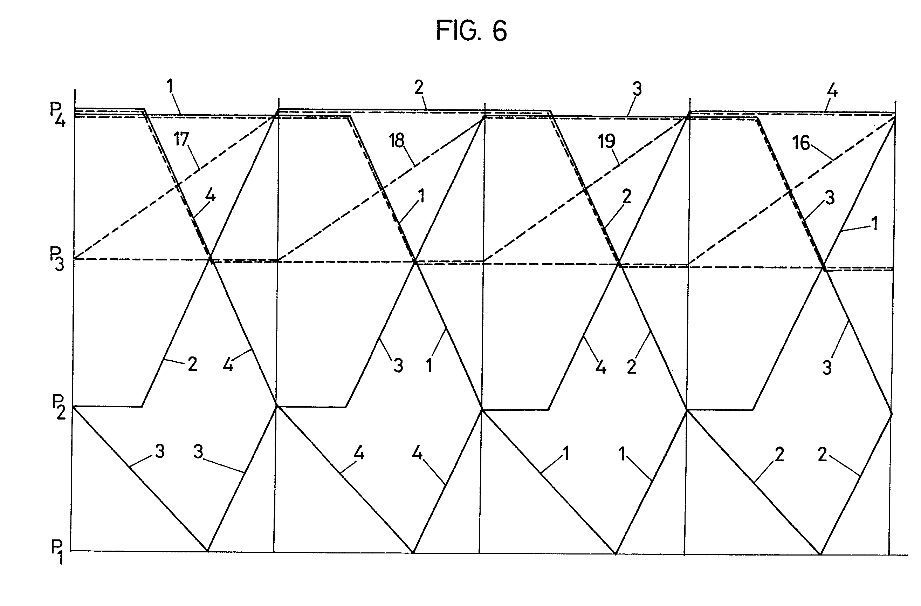

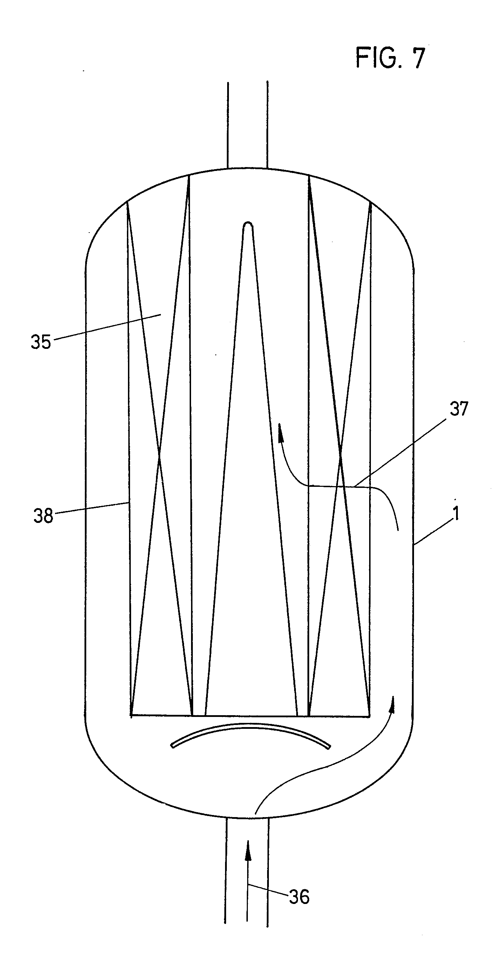

Die Erfindung wird nachfolgend an Hand von in der Zeichnung dargestellten Ausführungsbeispielen näher erläutert. In dieser zeigen Fig. 1 eine schematische Anlagenkonfiguration zur Durchführung des Verfahrens ohne den Spülschritt und Fig. 2, Fig. 3 diagrammatische Darstellungen des Verfahrensablaufes mit einer Anlage nach Fig. 1, Fig. 4 und Fig. 5 eine Anlagenkonfiguration mit dem Spülschritt, Fig. 6 das zugehörige Druckdiagramm und Fig. 7 den schematischen Aufbau eines Druckwechseladsorbers hierfür.

In Fig. 1 sind vier Druckwechseladsorber 1, 2, 3 und 4 vorgesehen. Jeweils eine gemeinsame Prozeßluftleitung 5, über welche die zu reinigende Prozeßluft unter einem Druck zwischen 1 und 20 bar, insbesondere 2 und 5 bar, zugeführt werden kann, sowie jeweils eine Entspannungsleitung 6, eine Saugleitung 7 und eine Produktgasleitung 8 sind über jeweils gesonderte Drehschieber 9 mit den Druckwechseladsorbern 1, 2, 3 und 4 in Verbindung bringbar. Die Drehschieber 9 sind gemeinsam, zumindest aber in ihrem Antrieb koppelbar, steuerbar und weisen jeweils eine axiale Zuführung für die genannten Leitungen 5, 6, 7 und 8 sowie radiale Auslässe für die Verbindungsleitungen 10 zu den Druckwechseladsorbern auf. Die Ausgangsposition der einzelnen Drehschieber ist jeweils so, daß mit dem Behälter 1 die Prozeßluftleitung 5, mit dem Behälter 4 die Entspannungsleitung 6, mit dem Behälter 3 die Saugleitung 7 und mit dem Behälter 2 eine Leitung zum kontinuierlichen Druckaufbau verbunden ist. Diese letztgenannte Leitung, welche mit 11 bezeichnet ist, stellt eine Zweigleitung der Produktgasleitung 8 dar, welche über eine Einrichtung 12 zur Regelung der Menge einem weiteren Drehschieber 9 zugeführt ist. Der Drehschieber 9 für die Produktgasabzugsleitung befindet sich in identischer Stellung wie der Prozeßluftzuführungsdrehschieber 9, so daß bei der in Fig. 1 dargestellten Stellung der Behälter 1 Prozeßluft zugeführt erhält und das gereinigte Produktgas, nämlich gereinigter Sauerstoff, über die Produktgasabzugsleitung 8 abgezogen wird. In diese Produktgasabzugsleitung 8 ist ein Analysengerät 13 eingeschaltet, welches die Reinheit des abgezogenen Sauerstoffes überwacht.

In die Zuleitungen zu den einzelnen Druckwechselbehältern 1, 2, 3 und 4 sind jeweils Druckmeßgeräte 14 eingeschaltet.

In die Entspannungsleitung ist ein Schalldampfer 15 eingeschaltet, über welchen die entspannte Luft an die Atmosphäre abgegeben wird.

Nach Beendigung der Beladung des ersten Druckwechseladsorbers gemäß Fig. 1 werden alle Drehschieber um jeweils 90° verstellt, so daß das Verfahren zyklisch um jeweils eine Druckwechseladsorbereinheit verschoben weitergeführt wird und bis auf die kurze Schaltzeit, welche einem Bruchteil der Dauer einer derartigen Phase des Prozesses entspricht, weitgehend kontinuierlich reines Gas über die Produktgasleitung 8 abgezogen werden kann.

Die Verhältnisse bei der Verfahrensdurchführung werden am deutlichsten an Hand der Fig. 2 und 3 erläutert. In Fig. 2 sind die einzelnen Phasen des Prozesses in den Druckwechseladsorbern 1, 2, 3 und 4 über die Zeit eines vollständigen vierstufigen Zyklus dargestellt. Im Behälter 1 erfolgt hiebei zunächst ein Beladen, wohingegen zur gleichen Zeit im Behälter 2 ein Druckaufbau auf den Druck der Prozeßluft durch Rückführung von Produktgas, nämlich gereinigtem Sauerstoff, erfolgt. Im dritten Druckwechselbehälter erfolgt gleichzeitig ein Evakuieren zur Vervollständigung der Regeneration, wohingegen im vierten Druckwechselbehälter eine Entspannung auf atmosphärischen Druck vorgenommen wird. Nach dem Umschalten der Drehschieber wird der zweite Druckwechselbehälter beladen, wohingegen der erste Druckwechselbehälter entspannt, der dritte Druckwechselbehälter mit Produktgas auf Prozeßdruck gebracht wird und der vierte Druckwechselbehälter evakuiert wird. Nach neuerlichem Umschalten und Ablauf eines identischen Zeitintervalles t erfolgt im ersten Behälter ein Evakuieren, im zweiten Behälter eine Entspannung, im dritten Behälter ein Beladen und im vierten Behälter ein Auffüllen mit Produktgas auf Prozeßgasdruck. Schließlich erfolgt nach wiederum identischem Zeitintervall t eine neuerliche Umschaltung, wobei der erste Behälter für die neuerliche Beladung durch Auffüllen mit Produktgas auf den Prozeßgasdruck wieder gefüllt wird, der zweite Behälter evakuiert wird, der dritte Behälter gegen atmosphärische Luft entspannt wird und gleichzeitig der vierte Behälter zu diesem Zeitpunkt beladen wird. Die zugehörigen Druckverhältnisse zu den einzelnen Behältern sind in den Druckkurven der Fig. 3 ersichtlich, in welcher 1 den Druckverlauf im ersten Behälter, 2 den Druckverlauf im zweiten Behälter, 3 den Druckverlauf im dritten Behälter und 4 den Druckverlauf im vierten Druckbehälter bezeichnet.

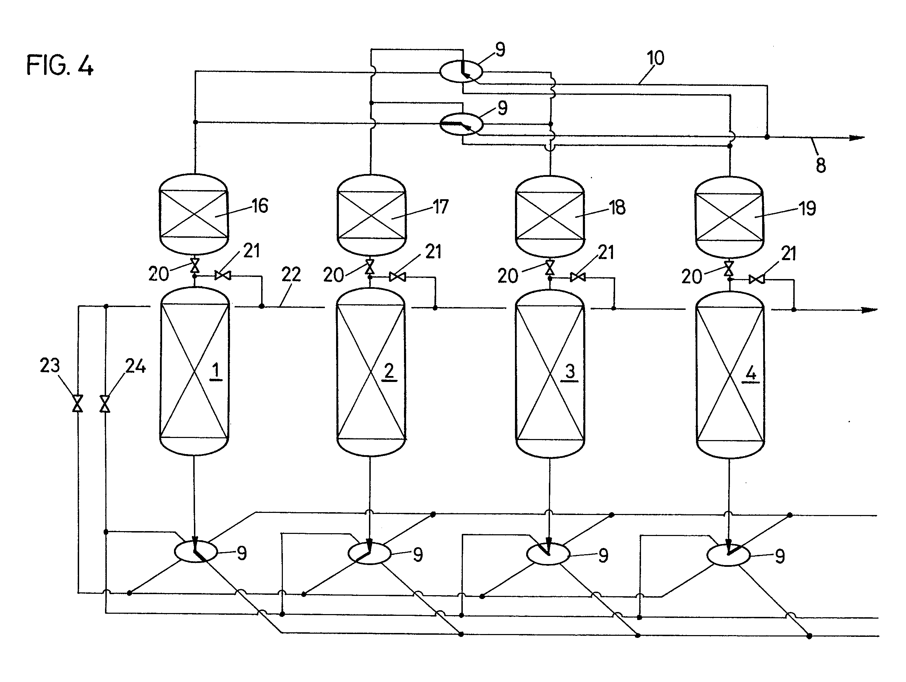

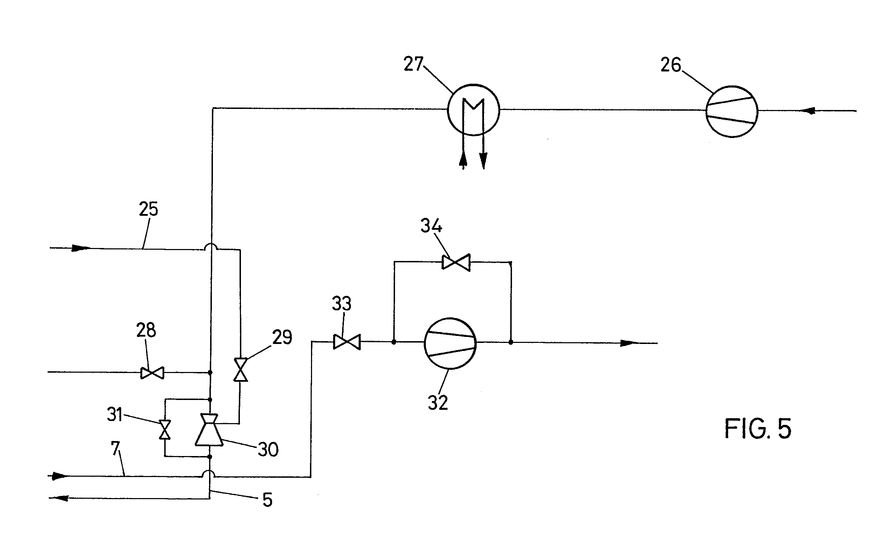

Um in dem vorstehend schematisch dargestellten Verfahren den Spülschritt zur Verminderung der Produktgasverluste unterbringen zu können ist eine weitere Unterteilung der einzelnen Verfahrensschritte erforderlich und dies wird in den Fig. 4 bis 6 näher erläutert. Bei der Ausbildung der Anlagenkonfiguration nach Fig. 4 und 5 sind nun zusätzlich zu den einzelnen Druckwechseladsorbern 1, 2, 3 und 4 jeweils in Serie geschaltete weitere Druckwechseladsorber 16, 17, 18 und 19 vorgesehen. Die Wegeventile bzw. Drehschieber wurden wiederum mit 9 bezeichnet, soweit sie in ihrer Funktion weitgehend dem in Fig. 1 dargestellten Aufbau entsprechen. Die Schaltvorgänge sind mit Rücksicht auf den zusätzlichen Spülvorgang naturgemäß abgewandelt. In die Verbindungsleitung zwischen den jeweiligen Druckwechseladsorbern 1, 2, 3 und 4 und den in Serie geschalteten zusätzlichen Druckwechsel adsorbern 16, 17, 18 und 19 sind Absperrventile 20 eingeschaltet, um auf diese Weise diese zusätzlichen Druckwechseladsorber vor übermäßigen Druckschwankungen zu sichern. An diese Verbindungsleitungen sind über weitere absperrbare Ventile 21 Druckausgleichsleitungen 22 angeschlossen, welche über vorzugsweise drosselbare Ventile 23 und 24 wahlweise mit entsprechenden Drehschiebern 9 in Verbindung setzbar sind. Für die Spülung ist eine Spülleitung 25 vorgesehen, welche bei der Darstellung nach Fig. 4 und 5 an die Verbindungsleitung zwischen den jeweils in Serie geschalteten Druckwechseladsorbern angeschlossen ist. Bei Ausbildung mit jeweils einem Druckwechseladsorber ohne den nachgeschalteten zweiten Adsorber mündet diese Spülleitung 25 naturgemäß in die Produktabzugsleitung. Der Vorgang des Spülens ist bei der Darstellung in Fig. 5 durch die entsprechenden Stellungen der Drehschieber 9 angedeutet.

In Fig. 4 ist der Druckwechseladsorber 4 auf Spülbetrieb umgeschaltet und es wird von einem Luftkompressor 26 verdichtete und über einen Wärmetauscher 27 abgekühlte Luft über den Boden des Druckwechseladsorbers 4 eingebracht, wobei das Ventil 28 geöffnet ist. Das am Kopf des Druckwechseladsorbers 4 austretende Gas ist mit der reinen Komponente angereichert und wird über die Leitung 25 bei geöffnetem Ventil 21 abgezogen, wobei ein zusätzliches Absperrventil 29 vorgesehen ist, um in der Folge den Druckausgleich zu ermöglichen. Die Spülleitung 25 mündet in einen Ejektor bzw. ein Gebläse 30 in die Rohgaszuführungsleitung 5. Um die Druckverluste des Ejektors bzw. des Gebläses 30 während des Betriebs zu eliminieren, kann nach Beendigung des Spülvorganges das By-passventil 31 geöffnet werden, so daß die vom Kompressor 26 verdichtete Luft unmittelbar zum weiteren Beladen des Druckwechseladsorbers 1 bei der Darstellung nach Fig. 4 herangezogen werden kann. Gleichzeitig mit diesem Beladevorgang des Druckwechseladsorbers 1 erfolgt somit während eines ersten zeitlichen Teilbereiches der für das Beladen zur Verfügung stehenden Zeit ein Spülen des Druckwechseladsorbers 4. Nach Beendigung des Spülvorganges wird das Ventil 28 wiederum geschlossen und ebenso das Ventil 29 gesperrt. Es kann auch Ventil 21 an Stelle von Ventil 28 geschlossen werden. Anschließend erfolgt ein zumindest partieller Druckabbau und damit eine teilweise Entspannung im Druckwechselbehälter 4 durch Öffnen des vorzugsweise drosselnden Ventiles 23, wobei ein teilweiser Druckaufbau im Druckwechseladsorber 2 erfolgt. Immer noch während der Beladephase wird in der Folge nach Schließen des Ventiles 23 und Öffnen des Ventiles 24 ein weiterer teilweiser Druckabbau im Druckwechseladsorber 4 durch Druckausgleich gegen den zuvor evakuierten Druckwechseladsorber 3 erzielt. Zu diesem Zeitpunkt muß allerdings bereits das Vakuumgebläse 32 von der Vakuumleitung 7 getrennt werden, wofür das Ventil 33 geschlossen wird. Um das Vakuumgebläse auch in diesem Zeitraum weiterhin ohne übermäßigen Energieverbrauch weiter betreiben zu können, ist wiederum eine Bypassleitung und ein Ventil 34 vorgesehen, welches nach dem Schließen des Ventiles 33 geöffnet wird und zum Zwecke der Evakuierung über die Leitung 7 geschlossen wird.

Während des Beladevorganges des Druckwechseladsorbers 1 ist naturgemäß das zugeordnete Ventil 20 in der Verbindungsleitung geöffnet und das Ventil 21 zur Druckausgleichsleitung 22 geschlossen. Das Rohgas durchströmt auf diese Weise den Druckwechseladsorber 1 und das weitgehend reine Produktgas durchströmt den zugehörigen Druckwechseladsorber 16 und kann hiebei über die Produktgasabzugsleitung 8 abgezogen werden. Während der gesamten Beladezeit des ersten Druckwechseladsorbers wird der dem zweiten Druckwechseladsorber zugeordnete Druckwechseladsorber 17 über eine Zweigleitung 10 der Produktgasleitung 8 kontinuierlich und möglichst schonend auf Betriebsdruck wiederum aufgedrückt, wobei allerdings zu bemerken ist, daß die Absenkung des Druckes in diesen Druckwechselbehältern, welche den Haupt behältern nachgeschaltet sind relativ gering war. In der Schlußphase, d.h. im dritten Drittel der Zykluszeit für das Beladen wird zusätzlich auch das Ventil 20 zwischen dem Druckwechseladsorber 17 und 2 geöffnet, so daß auch im Druckwechseladsorber 2 in dieser Schlußphase ein Druckaufbau auf den Prozeßdruck unter Verwendung des Produktgases erfolgt. Alle übrigen Verfahrensschritte sehen bei dieser Anlagenkonfiguration keine Strömungsrichtungumkehr vor und lediglich der letzte Teilbereich des Druckaufbaues, bei welchem Produktgas zum Einsatz gelangt, sowie die Entspannung jener Behälter mit hohem Druckniveau in den vorgesehenen Behälter mit kleinerem Druck, erfolgen entgegen der Strömungsrichtung.

Die zugehörigen Druckdiagramme sind in Fig. 6 dargestellt, wobei die einzelnen Linien den in Fig. 4 und 5 dargestellten Druckwechseladsorbern in ihrer Numerierung entsprechen. Im Verfahrensablauf stehen hiebei vier verschiedene Drücke, nämlich ein Druck $P_1$, welcher dem Unterdruck der Vakuumpumpe entspricht, ein Druck $P_2$, welcher der zweiten Entspannungsstufe entspricht und ein Druck $P_3$, welcher nach der ersten Entspannung erzielt wird, und der Betriebsdruckes $P_4$ zur Verfügung. Das Druckdiagramm macht deutlich, daß die erste Entspannung des Druckwechseladsorbers 4 nach dem Spülen gegen den Druckwechseladsorber 2 erfolgt, wohingehend nachfolgend eine weitere Entspannung gegen den zuvor evakuierten Druckwechseladsorber 3 vorgenommen wird. Anschließend wird der Druckwechseladsorber 4 durch Aufschalten der Vakuumpumpe selbst evakuiert, worauf ein erster Druckausgleich gegen einen zuvor bereits teilweise entspannten Druckwechseladsorber 1 vorgenommen wird. Das Verfahren wiederholt sich in der dem Druckdiagramm nach Fig. 6 entnehmbaren zyklischen Weise, wobei sich auf Grund des Verfahrensablaufes mit einer zweistufigen Entspannung eine Drittelung der jeweiligen Zykluszeit für das Beladen für die einzelnen Verfahrensunterschritte ergibt.

Ein für die Durchführung des Verfahrens besonders bevorzugter Druckwechseladsorber ist in Fig. 7 dargestellt. Das Molsiebmaterial ist in ringförmigen Räumen 35 angeordnet, wobei der Druckwechseladsorber, welcher der Einfachheit halber wiederum mit 1 bezeichnet wurde von unten beim Beladen in Richtung des Pfeiles 36 durchströmt wird. Die zu reinigende Luft durchströmt die ringförmige Molsiebmaterialsäule 35 in radialer Richtung entsprechend dem Pfeil 37, wobei sich Wasserdampf in der äußersten Mantelfläche 38 festsetzt. Bedingt durch die große abstrahlende Oberfläche dieser äußersten Mantelfläche kann eine isotherme Abführung der Desorptionswärme über die Außenwand des Druckwechseladsorbers 1 sichergestellt werden, so daß Vereisungsprobleme auch bei hohen Durchsatzmengen nicht beobachtet werden.

## Patentansprüche

1. Verfahren zum Reinigen von Gasen, insbesondere zum Abtrennen von Sauerstoff aus Luft, unter Verwendung von Druckwechseladsorbern (1,2,3,4), bei welchem das zu reinigende Gas unter Druck mit selektiv adsorbierenden Materialien in Kontakt gebracht und durch Entspannen und gegebenenfalls Anwendung von Saugdruck die adsorbierten Gase zur Regeneration der adsorbierenden Materialien desorbiert werden, wobei eine Mehrzahl von Druckwechseladsorbern (1,2,3,4) zyklisch mit zu reinigendem Gas beaufschlagt, zur Desorption entspannt, gegebenenfalls zur weiteren Desorbierung unter Unterdruck gesetzt und dem Druckaufbau unter Beladedruck unterzogen wird, und die Zeiten für die Beladung, das Entspannen und gegebenenfalls die Anwendung von Saugdruck zur Desorption für das Regenerieren des adsorbierenden Materials und einen neuerlichen Druckaufbau auf den Beladedruck für die zyklische Durchführung des Verfahrens aneinander angeglichen werden, dadurch gekennzeichnet, daß der Adsorber (4) vor der Entspannung mit Luft gespült wird und daß das ausgespülte Volumen einem anderen Adsorber (1) in dessen Beladephase zugeführt wird, und daß anschließend an das Spülen eine mehrstufige, insbesondere zweistufige Entspannung gegen voneinander verschiedene Druckwechseladsorber (2,3) vorgenommen wird.

2. Verfahren nach Anspruch 1, dadurch gekennzeichnet, daß das Spülen eines Adsorbers (1,2,3,4) innerhalb der für die Entspannung zur Verfügung stehenden Zykluszeit dieses Adsorbers (1,2,3,4) erfolgt.

3. Verfahren nach Anspruch 1 oder 2, dadurch gekennzeichnet, daß für das Spülen und die beiden Entspannungsstufen je ein Drittel der für das Beladen vorgesehenen Zykluszeit aufgewendet wird.

4. Verfahren nach einem der Ansprüche 1, 2 oder 3, dadurch gekennzeichnet, daß innerhalb der für das Evakuieren zur Verfügung stehenden Zeit anschließend an das Evakuieren eine Druckanhebung gegen einen teilweise entspannten Druckwechseladsorber (1,2,3,4) erfolgt.

5. Verfahren nach einem der Ansprüche 1 bis 4, dadurch gekennzeichnet, daß jeweils zwei Druckwechseladsorber (1,16; 2,17;3,18;4,19) in Serie geschaltet sind, daß beide in Serie geschalteten Druckwechseladsorber (1,16;2,173,18;4,19) während gleicher Zeiträume beladen, gespült und auf ein erstes unter dem Betriebsdruck für das Beladen liegendes Druckniveau entspannt werden und daß der beim Beladen in Strömungsrichtung des zu trennenden Gases erste Adsorber nach dem Erreichen dieses ersten Druckniveaus weiter entspannt und gegebenenfalls evakuiert wird.

6. Verfahren nach einem der Ansprüche 1 bis 5, dadurch gekennzeichnet, daß die Anzahl von Druckwechseladsorbern (1,2,3,4,) oder Serien von Druckwechseladsorbern (1,16;2,17; 3,18;4,19) gleich oder als ganzzahliges Vielfaches der Anzahl der hintereinanderfolgenden Verfahrensschritte, insbesondere als vier oder als ganzzahliges Vielfaches von vier, gewählt wird.

7. Verfahren nach einem der Ansprüche 1 bis 6, dadurch gekennzeichnet, daß der Druckaufbau auf den Beladedruck nach dem Entspannen oder der Anwendung von Saugdruck und gegebenenfalls nach der Anhebung auf ein unterhalb des Betriebsdruckes für das Beladen liegendes Druckniveau durch Ausgleich mit einem auf höherem Druckniveau stehenden Druckwechseladsorber (1,2,3,4), mit einer Teilmenge des Produktgases vorgenommen wird.

8. Verfahren nach einem der Ansprüche 1 bis 7, dadurch gekennzeichnet, daß als adsorbierendes Material für die Her stellung von reinem Sauerstoff als Produktgas ein $N_2$ und unerwünschte Gaskomponenten, wie z.B. $H_2O$, $CO_2$ usw., zurückhaltendes Molsiebgranulat eingesetzt wird.

9. Vorrichtung zur Durchführung des Verfahrens nach einem der Ansprüche 1 bis 8, dadurch gekennzeichnet, daß eine Gaszuführungsleitung (5), eine Entspannungsleitung (6), gegebenenfalls eine Saugleitung (7), und eine Produktgasabzugsleitung (8) über jeweils wenigstens ein Wege- bzw. Verteilerventil (9) je Leitung mit einer Mehrzahl von Druckwechseladsorbern (1,2,3,4) in Verbindung setzbar ist.

10. Vorrichtung nach Anspruch 9, dadurch gekennzeichnet, daß die Wegeventile bzw. Verteilerventile (9) als Kükenhähne oder Drehschieber ausgebildet sind.

11. Vorrichtung nach Anspruch 10, dadurch gekennzeichnet, daß die Drehschieber (9) als Hähne axial mit den Leitungen (5,6, 7,8) und über radiale Auslässe mit den Druckwechseladsorbern (1,2,3,4) verbunden sind.

12. Vorrichtung nach Anspruch 9, 10 oder 11, dadurch gekennzeichnet, daß die Wege- bzw. Verteilerventile (9) mit ansteuerbaren Antrieben, insbesondere elektrischen Stellmotoren, verbunden sind oder daß die Wege- bzw. Verteilerventile (9) teilweise miteinander koppelbar sind.

13. Vorrichtung nach einem der Ansprüche 9 bis 12, dadurch gekennzeichnet, daß eine Zweigleitung der Produktgasleitung (11) gegebenenfalls über ein Mengenregelventil (12) mit einem zusätzlichen Wege- bzw. Verteilerventil (9) verbunden ist, dessen Auslässe mit den einzelnen Druckwechseladsorbern (1,2,3,4) in Verbindung stehen.

14. Vorrichtung nach einem der Ansprüche 9 bis 13, dadurch gekennzeichnet, daß in die Produktgasleitung (8) ein Analysengerät (13) eingeschaltet ist und daß bei Überschreiten eines Konzentrationsgrenzwertes einer Komponente des zu gewinnenden Gases die Antriebe für die Wege- bzw. Verteilerventile (9) ansteuerbar, insbesondere die Schaltintervalle für die Wege- bzw. Verteilerventile (9) kontinuierlich veränderbar sind.

15. Vorrichtung nach einem der Ansprüche 9 bis 14, dadurch gekennzeichnet, daß in die Produktgasleitung eine Mengenmeßstrecke eingeschaltet ist, und daß nach dieser Produktmengenanzeige einerseits die Rohgaszuführung geregelt und anderseits die Schaltintervalle für die Wege- und Verteilerventile (9) im wesentlichen proportional verändert werden.

6. Vorrichtung nach einem der Ansprüche 9 bis 15, dadurch gekennzeichnet, daß 4/4-Wegeventile (9) und vier Druckwechseladsorber (1,2,3,4) vorgesehen sind.

17. Vorrichtung nach einem der Ansprüche 9 bis 16, dadurch gekennzeichnet, daß die Mengenregelung für zum Druckaufbau rückgeführtes Produktgas in Abhängigkeit von der Zeit, welche für den Druckaufbau im Zyklus zur Verfügung steht, auf linearen Druckaufbau einstellbar ist.

8. Vorrichtung nach einem der Ansprüche 9 bis 17, dadurch gekennzeichnet, daß an die Produktgasleitung (8) oder im Falle von in Serie geschalteten Druckwechseladsorbern (1-4, 16-19) an die Verbindungsleitung derselben eine Zweigleitung (25) angeschlossen ist, welche über ein abschließbares Ventil 30 (20) und gegebenenfalls über die Saugseite eines Ejektors oder Gebläses (30) mit der Rohgaszuführungsleitung (5) verbunden ist.

19. Vorrichtung nach einem der Ansprüche 1 bis 18, dadurch gekennzeichnet, daß die Druckwechseladsorber (1-4,16-19) mit ringförmigen Adsorbersäulen (35), welche radial durchströmbar sind ausgebildet sind.

0258206

# FIG. 1

Behälter 1

Behälter 2

Behälter 3

Behälter 4

Zeit

$\Delta t$       $\Delta t$       $\Delta t$

Beladung
Entspannung
Aufdrücken
Vakuum

FIG. 2

Druck (p)

1      2

1

4     3     4     4

1

FIG. 3

Zeit (t)

FIG. 4

0258206

FIG.5

FIG. 6

FIG. 7

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | FR-A-2 369 864  (BOC LTD) * Seite 5, Zeile 29 - Seite 6, Zeile 38; Seite 8 * | 1 | B 01 D  53/04 C 01 B  13/02 |
| A | * Seite 2, Zeilen 26-30 * | 8 | |
| A | * Figur 1 * --- | 13 | |
| Y | EP-A-0 146 124  (LINDE AG) * Seite 7, Zeile 30 - Seite 9, Zeile 28; Figur 2 * | 1 | |
| A | * Seite 7, Zeile 30 - Seite 9, Zeile 28; Figur 2 * --- | 7 | |
| A | EP-A-0 107 179  (PREUSSAG AG) * Figuren 1-5 * --- | 9,12 | |
| A | US-A-2 919 764  (E. DILLMAN) * Figur 2a * | 10 | |
| A | * Figur 1 * --- | 18 | |
| A | US-A-4 209 308  (G. BLODGETT) * Figuren 5-9 * --- | 10,12 | RECHERCHIERTE SACHGEBIETE (Int. Cl.4) |
| A | EP-A-0 207 686  (NEGRETTI AVIATION) * Zusammenfassung * --- | 14 | B 01 D |
| A | EP-A-0 022 178  (LINDE AG) * Anspruch 1 * --- | 15 | |
| A,P | EP-A-0 222 731  (VOEST-ALPINE) * Insgesamt * --- | 19 | |
| A | EP-A-0 118 349  (L'AIR LIQUIDE) * Figur 4 * ----- | 19 | |

Der vorliegende Recherchenbericht wurde für alle Patentansprüche erstellt

| Recherchenort | Abschlußdatum der Recherche | Prüfer |
|---|---|---|
| DEN HAAG | 13-11-1987 | KANOLDT W.W. |